# EUROPEAN PATENT SPECIFICATION

(11) **EP 3 507 586 B1**
(45) Date of publication and mention of the grant of the patent: **06.01.2021**
(21) Application number: 17768355.4
(22) Date of filing: 18.08.2017
(51) Int. Cl.: G01N 15/02, G01N 15/14, G01N 15/00

(54) **A MEASURING DEVICE FOR ANALYSIS OF PARTICLES AND METHOD OF ANALYZING PARTICLES USING THE MEASURING DEVICE**
MESSVORRICHTUNG ZUR ANALYSE VON PARTIKELN UND VERFAHREN ZUR ANALYSE VON PARTIKELN UNTER VERWENDUNG DER MESSVORRICHTUNG
DISPOSITIF DE MESURE UTILISÉ POUR L'ANALYSE DE PARTICULES, ET PROCÉDÉ D'ANALYSE DE PARTICULES AU MOYEN DU DISPOSITIF DE MESURE

(30) Priority: 30.08.2016 DK PA201600503
(43) Date of publication of application: 10.07.2019
(73) Proprietor: Scangrading APS, 3520 Farum (DK)
(72) Inventor: EGHOLM, Janus, Farum 3520 (DK)
(74) Representative: Holme Patent A/S
(86) International application number: PCT/DK2017/050267
(87) International publication number: WO 2018/041314

(56) References cited:
- EP-A1- 0 193 308
- EP-A1- 2 591 901
- JP-A- H0 663 385
- US-A- 3 545 610
- US-A1- 2003 029 946

## Description

The present invention relates to a measuring device for analysis of particles.

The measuring device comprises
- a first feeding chute and a consecutive second feeding chute,
- the first feeding chute and the consecutive second feeding chute are arranged so that the first feeding chute is arranged above the consecutive second feeding chute, so that the particles of a flow of particles that falls from a free open end of the first chute are controlled in order for said particles to be delivered in free fall onto the consecutive second feeding chute,
- the feed rate of the feeding chutes is controlled by signals from camera units, which signals are analyzed by a computer unit, whereby the particles at the consecutive second feeding chute are separated before they fall out over the edge at the open end of the consecutive second feeding chute.

The invention concerns especially the analysis of the size of particles in a sample. Within the scope of the present invention the sample can also be used to analyze, diagnose, test other features of the particles or objects in a sample, such as e.g. the color and the shape.

The invention concerns especially analyzes of small particles, however much larger objects can also be analyzed using the measuring device in accordance with the present invention. As examples of larger objects can e.g. be mentioned potatoes and apples, but even larger objects may be analyzed using the measuring device of the present invention.

The inventions can be used in many kinds of industry, including but not limited to the food industry, to analyze crushed stone, gravel, and rubble, and in any production where the distribution of the individual objects and/or particles matter.

For example in sugar production, the distribution of grain size is an important parameter in the production, but also for many of the industries using sugar in their products, grain size distribution is important. As an example, the dissolution rate is dependent on the grain size, and therefore the grain size is often checked by the end user. This includes cake manufacturers, candy manufacturers, soft drink manufacturers etc. Checking is often performed by taking samples, either random or at intervals, from production, which samples will be analyzed using instruments that are designed to measure the grain size distribution.

Manual methods, based on a system of stacked sieves in which the sieves have a decreasing mesh size, exist. The particle size distribution can be determined by weighing the residuals on each sieve. In the sugar industry, they call this method the ICUMSA method.

There also exist computer-based analysis methods, where the material samples are attempted separated and images taken of the particles in free fall. From the images, the particle size and distribution is calculated using image analysis.

In known solutions of measuring devices, that are using feeding chutes for dispensing particles, it is the shape and vibration frequency of the chute that determine how much the particles will be separated before they reach the edge of the feeding chute. This kind of separation of the particles is difficult if not impossible to control. This is particularly difficult for small particles wherein the dispersion of the particle size is relatively large, and in case the particles tends to aggregate.

In an attempt to control the amount of particles that is conveyed forward in the feeding chute, solutions for existing systems are available, where the feed hopper neck is positioned close to the bottom of the chute, in order to restrict the layer thickness on the feeding chute. Another solution uses an additional vibrator on the oscillating chute that applies vibrations at a perpendicular angle with respect to the feed direction.

From International patent application no. WO 02/44692 is known an apparatus for carrying out the analysis of the colorimetry, as well as of the size and the purity of ground products.

US patent application no. 2003/029946 relates to another single-chute apparatus. US patent no. 3,545,610 relates to a sorting apparatus including two consecutive horizontal, spring-suspended table feeders. European patent application no. EP 0193308 relates to the tobacco industry and sorting impurities from streams of tobacco leaves using a blast. European patent application no. EP 2591901 relates to a pellet dosing apparatus in which pellets intercept a light beam generated by a counting device to counter the number of free falling pellets.

Japanese patent application no. H06 63385 relates to method and device for determining presence of granules in a flow of granular material. The device only has one vibrating chute and utilizes simple optical sensors to detect the granules passing by the optical sensors. No image representation of the granules is included.

It is a main aspect of the present invention to provide a measuring device of the kind mentioned in the opening paragraph for determining at least the size, shape and/or color of the particles or objects in a sample.

In a further aspect is provided a method for determining at least the size, shape and/or color of the particles or objects in a sample.

The novel and unique whereby these and other aspects are achieved according to the present invention consist in that the measuring device comprises that
- each feeding chute (1;17) has a means for generating vibrations at controlled frequency (19;12),
- a first set of a first camera unit (7) and a first light source (8) arranged below the first feeding chute (1),
- a second set of a second camera unit (13) and a second light source (15) arranged below the second feeding chute, wherein
- both the first set of a first camera unit (7) and a first light source (8) and the second set of a second camera unit (13) and a second light source (15) is placed so that the particles (2;18) fall freely through the optical path between a camera unit (7;13) and a light source (8;15) of a respective set,
- the means for generating vibrations at controlled frequency (19;12) and the camera units (1;13) are connected to a computer unit (21),
- the computer unit (21) is adapted to
   - receive the signals from the camera units (7;13) and analyze said signals in order to control the means for generating vibrations at controlled frequency (19;12), and
   - adapted to analysis the densities of the particles on the respective feeding chute (1:17) and to analyse the size distribution of particles in a sample,
   and
- the means for generating vibrations at controlled frequency (19;12) are adapted to control the vibration speed of each of the first (1) and the second feeding chutes (17) independently.

In order for the analysis of the sample to be accurate, it is important that the particles do not overlap while they fall through the area in which the images are generated. In the case of overlapping particles, the image analysis of the in the known computer-based methods will treat the overlapping particles as a single particle, and thus the calculated particle distribution will become incorrect.

In products, such as sugar, there is a tendency for the grains to stick together or to get attached to the surfaces they are in contact with, both of which cause inaccuracies in the known computer-based methods of analysis, since the size distribution is based on the result of the image analysis.

The measuring device of the present invention has a built-in system for the separation of particles so that e.g. the particle size, color and/or shape can be measured with high precision.

The measuring device has a first feeding chute and a consecutive second feeding chute, however a plurality of consecutive feeding chutes equipped as the preceding feeding chutes with means to control the vibration frequency of the feeding chute, light sources and camera units are foreseen within the scope of the present invention. In the subsequent description the term the last feeding chute is used to illustrate that more than two consecutive feeding chutes can be implemented in the present invention. The last feeding chute may be the second consecutive feeding chutes in embodiments limited to two feeding chutes.

The measuring device for the measuring of particles or other objects in a sample, which is in accordance with the invention for the analysis of particles, is generally intended for determining at least the size distribution of particles or objects in a bulk material sample.

To that aspect the measuring device has two built-in feeding chutes. Attached to each feeding chute is a vibrator. The vibrating frequency of each vibrator is controlled so the vibration intensity varies, so that the particles or objects are conveyed at different conveying speeds and rates from the charging end, which may be closed, to the open end of the feeding chute. The feeding chutes are positioned so that the second feeding chute is receiving the particles from the first feeding chute.

Under the first feeding chute, a light source and a camera unit, which measures the particle density, is installed. Under the second and any consecutive feeding chute, a light source and a camera unit, which measures the size of the particles as well as the particle density, is installed. The camera units installed at the free end of a respective feeding chute wherefrom the particle and/or objects fall are connected to a computer unit that performs the analysis of the signals from the camera units.

Using e.g. two consecutive feeding chutes, makes it possible to feed the particles from the first feeding chute to the second chute such that the particles, during transport on the second chute, are separated before they fall off the edge of the second feeding chute. Thus, it will be possible to achieve good accuracy in the result from the analysis which calculates the particle distribution. In addition to this, the measuring device, with two feeding chutes provided with means for generating vibrations at controlled frequency, enables a high level of reproducibility.

With a color camera under the feeding chute, it is also possible to measure the color of the particles or objects, which is sometimes a parameter that the producer and the end user will want to know about. It may for example be important to end users of sugar, as sugar among others used for soft drinks, must have a well-defined color or should not be colored.

Each feeding chute is fixed to a means for generating vibrations at controlled frequency, thus "a frequency controlled vibration generator", and the vibrating frequency on each feeding chute is controlled by the results from the computer image analysis done by the computer unit. The vibration speed of the first chute is controlled by the analysis that calculates the particle density on the way to the final chute in the sequence of consecutive feeding chutes. In the event that the density is greater than desired, the vibration speed is reduced and vice versa if the particle density is less than desired.

The last chute generally has a high feed rate compared to the rate of advance on the first chute, and in this way the particles are separated before they reach the open end of the last feeding chute. In addition to measuring the particle size, the particle density of the particles, falling down from the open end of the last feeding chute, can also be analyzed. Here the occurrence of overlapping particles is analyzed. Should there be any occurrences of overlapping particles, the vibration speed of the last chute is reduced until the particle density reaches the desired level, after which in turn the vibration speed is increased to a reasonable level until the desired high vibration speed is reached. If it turns out that it is not possible to achieve the desired high vibration speed, where particles separate sufficiently, the desired particle density from the first feeding chute is adjusted down so that the desired speed of advancement on the last feeding chute is obtained.

As the first feeding chute is being emptied, there will be fewer and fewer particles coming to the last feeding chute and the particle density, which is detected by the camera unit system, is getting smaller and smaller. The computer unit receives signals accordingly and the means for generating vibrations at controlled frequency gradually increases the vibration frequency until it finally ends at the maximum frequency. When the vibration speed of the feeding chute is at maximum, the last particles, which may stick to the surface, detach. After a predetermined time, when no further particles exit the open edge of the last feeding chute, both vibration generators are stopped and the computer unit calculates the particle distribution and possibly the color and any other measured parameter of the sample.

The two feeding chutes of the measuring instrument may be placed in a horizontal plane at an arbitrary angle relative to each other, and the first open end of the first feeding chute provides material for the subsequent consecution feeding chute, such as the second feeding chute. The slope of the feeding chutes in the described measuring device can be positive, zero or negative with respect to a horizontal plane.

The design of the feeding chutes may include one or more design options such as e.g. that
- in addition to having a closed end and an open end the feeding chute may have sides to confine the sample to the feeding chute, and/or
- one or both of the first feeding chute and the consecutive second feeding chute may also have a concave, a convex or a flat bottom, and/or
- the feeding chutes can have different shapes.

In all configurations of the measuring device, there may be one or more computer units that analyze the data from the camera units for the analysis of the sample of particles or objects, and to control the vibration frequency of the feeding chutes.

In measuring devices which, in addition to the size and shape of the particles or objects in a sample, also measure the color, at least one color camera is installed below one of the feeding chutes.

The invention further relates to a method of analyzing particles using the measuring device described above, wherein a sample of particles or objects is transported in at least two consecutive feeding chutes by means of means for generating vibrations at controlled frequency in such a way that the particles or objects on the last feeding chute are separated before they fall freely through the optical path after said last feeding chute.

The flow of particles that fall out over an open edge of the first feeding chute is controlled by the signals from the first camera unit under the first feeding chute and a feedback of the signals from the second and any subsequent camera unit under the second and subsequent feeding chute, respectively, is send to the computer unit to control that any excessive particle density falling through the optical path at the open edge of the second and consecutive feeding chute result in a reduction in the flow of particles from the first or other preceding feeding chute, as well as in a temporary reduction in the conveyance of particles on the second and consecutive feeding chute.

Preferably the speed of the means for generating vibrations on the feeding chutes is/are controlled continuously to increase control of separation of the particles in a sample.

The speed of the means for generating vibrations may be set at full speed and controlled by time when the sample is terminated to empty the feeding chutes fully of particles and objects included in the sample being analyzed.

Other advantages and features of this invention will be described in more detail in the following with reference to the accompanying drawing, wherein
Fig. 1 is a schematic side view of a measuring device for the analysis of e.g. particles in accordance with the invention, and
Fig. 2 shows schematically a top view of two consecutive feeding chutes.

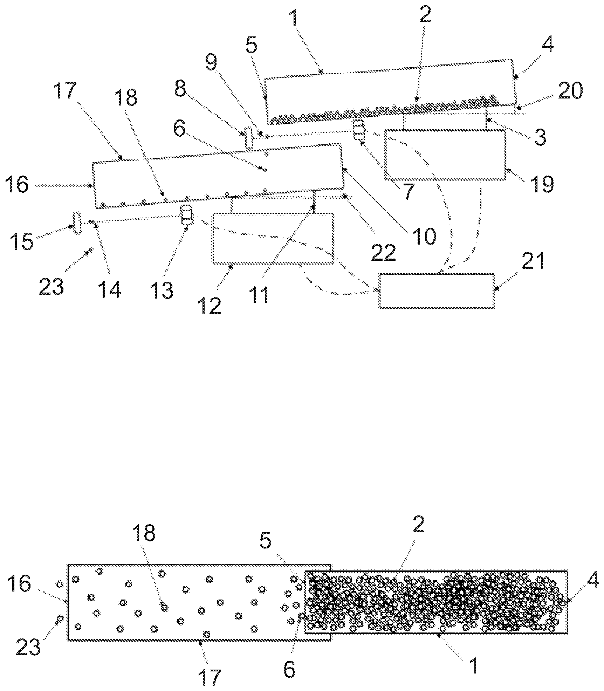

With reference to Fig. 1 and 2 the design of the measuring device for analyzing particles is described, in accordance with the invention, as follows.

The camera-based measuring device, as schematically illustrated from a side view in Fig. 1, is used to analyze particles **2** and in particular small and very small particles of bulk goods such as sugar, coffee and the like. Some individual particles **18** and **23** are shown in Fig. 1.

The particle distribution in the two chutes is schematically shown in Fig. 2, and the first feeding chute **1,** which is the first of two chutes **1,17** in the configuration of the measuring device, is formed with a closed end **4** and an open end **5,** in which the particles are then routed such that the particles **6** in free fall are fed to the second and last feeding chute **17.**

In Fig. 1, the first feeding chute **1** is shown with a positive angle **20** with respect to the horizontal plane so that it decreases from the closed end **4** to the open end **5.** With this configuration, gravity will assist the particles **2** in moving towards the open end **5,** but in other configurations, the angle **20** can be 0 (horizontal), or negative with an inclination from the closed end **4** to the open end **5.**

The first feeding chute **1** is by means of a mechanical connection **3** coupled to a first vibration generator **19** that controls its vibration frequency. For the further detailed description a means for generating vibrations at controlled frequency means is for the sake of simplicity also named "frequency controlled vibration generator".

The function of the first frequency controlled vibration generator **19** is to facilitate forward movement of the particles **2** on the first feeding chute **1,** and by increasing or decreasing the frequency of vibrations by means of the first vibration generator **19,** the rate of movement of the particles **2** is controlled according to the particle density observed by camera unit **7.**

In Fig. 1, the first feeding chute **17** is shown with a positive angle **22** with respect to the horizontal plane so that it falls from the closed end **10** to the open end **16.** With this configuration, gravity will assist the particles **18** in moving towards the open end **16,** but in other configurations, the angle **22** is 0 (horizontal) or negative with an inclination from the closed end **10** to the open end **16.**

The second and last feeding chute **17** is coupled to a second frequency controlled vibration generator **12** using a mechanical connection **11.**

The function of the second frequency controlled vibration generator **12** is to create sufficient forward movement so that the particles **6,** which are falling onto the second and last feeding chute **17,** are advanced at a high speed towards the open end **16** of the second and last feeding chute **17.** This causes the particles **18** to separate, as shown in Fig. 2, before they fall off the edge of the open end **16.**

In order to carry out the measuring of the particle density and, optionally, color of the particles **6,** there is a first light source **8** placed so that the particles 6 fall through the optical path **9** between the first camera unit **7** and the first light source **8** on the way down into the second and last feeding chute **17.**

In order to carry out the measuring of particle size, shape, density, and optionally color, there is located a second light source **15** which illuminates towards the second camera unit **13** and the particles **18,** which fall out of the open end **16** of the second and last chute **17,** are passing through the optical path **14** between the second light source **15** and the second camera unit **13.**

The camera units **7** and **13** and the vibration generators **19** and **12** are connected to a computer unit **21** which receives signals from the camera units **7** and **13.** In the computer unit **21** the signals from the camera unit **7** are analyzed to determine the particle density and, optionally, color, while the signals from the second camera unit **13** are analyzed to determine the particle size, shape, density, and optionally color.

From the particle density analysis results of the particles **6,** a signal is transmitted to the first vibratory generator controller **19** and the desired vibration frequency is set. In this way, the desired particle density is always achieved, and it is adjusted so that the particles **18** of the second and last feeding chute **17** are sufficiently separated before they fall off the edge of the open end **16** of the second and last feeding chute **17.**

Basically, the vibration rate of the second frequency-controlled vibration generator **12** may be high, but it can be controlled by the computer unit **21.** This is done in the event that the second camera unit **13** detects the large particle density of the particles **2** second and last feeding chute **17.** In the case of a too high particle density of the particles **23** in the free fall through the open end **16 of the** second and last feeding chute **17,** the speed of the second vibration generator **12** is temporarily reduced until the particle density is normalized. Then the speed of the second vibration generator **12** is increased again to the desired high value.

If the particle density of the particles **6** on the first feeding chute **1,** observed by the first camera unit **7,** is too large, there is a risk that the separation of the particles in the subsequent chute **17** is not sufficient, and thus, there may be overlap of the particles **23,** falling off the edge of the open end **16** of the second and last feeding chute **17.** In this situation, the more particles could be seen as a particle too large, and the measuring of such overlapping particles will give the wrong result.

In the case of persistent overlapping particles **23,** the measuring of the size distribution will be incorrect and the result of the analysis becomes worthless.

In the event that the second camera unit **13** measures a to high particle density of the particles **23** that fall off the edge at the second and last feeding chute **17,** the signal is sent to the computer unit **21,** which reduces the desired particle density of the particles **6,** measured by the first camera unit **7,** and thus transmits a signal to the first vibration generator **19** such that the conveying speed of the particles **2** is reduced. In this way, an optimal separation of the particles **23** within the particle analysis is achieved, while the analysis speed is kept at its optimal for the current sample.

When no more particles are exiting the open end **5** of first feeding chute **1,** the frequency of the first vibration generator **19** is increased until the frequency is at the maximum, and in this way the first feeding chute **1** is empty for any possible small particles having been stuck on the surface. When the first feeding chute **1** and the second and last feeding chute **17** have been running the maximum for a predefined time, set in the computer unit **21,** the device stops and the device is then ready for the next sample.

This method for emptying the device of particles means that it is only rarely necessary to carry out a manual cleaning of the respective feeding chutes **1** and **17.**

In its entirety, the invention is a measuring device and/or instrument for measuring at least size, density, shape, and color, and combinations of these parameters of small particles, as well as of larger objects. The measuring device and the method of the invention provide analytical results of bulk goods (small and large particles) with specific parameters that are comparable to the recognized manual methods, for example ICUMSA sugar. This includes the particle size, particle shape, size distribution and color.

The measuring device for analysis of particles, such as sugar and coffee, consisting of two feeding chutes each attached to a frequency-controlled vibration generator, controlled by signals from camera units placed under each feeding chute. Under each feeding chute, there is a light source and a camera unit that is used to capture images of particles that fall from the feeding chutes. The signals from the camera units are received by a computer unit that analyzes them, and from the measured particle densities between the first and last feeding chute and after the last feeding chute, the flow rate in the two feeding runs is controlled. The flow rate in the last feeding chute is set high while the first feeding chute is controlled to achieve a constant flow of particles to the last feeding chute while the flow rate is adjusted by the separation of the particles as they leave the last feeding chute.

## Claims

1. A measuring device for analyses of particles (2;18;23)comprises
- a first feeding chute (1) and a consecutive second feeding chute (17),
- the first feeding chute (1) and the consecutive second feeding chute (17) are arranged so that the first feeding chute (1) is arranged above the consecutive second feeding chute (17), so that the particles (2) of a flow of particles that falls from a free open end (5) of the first feeding chute (1) are controlled in order for said particles (2) to be delivered in free fall onto the consecutive second feeding chute (17),
- the feed rate of the feeding chutes (1;17) is controlled by signals from camera units (7;13), which signals are analyzed by a computer unit (21), whereby the particles (18) at the consecutive second feeding chute (17) are separated before they fall out over the edge at the open end (16) of the consecutive second feeding chute (17),
**characterized in that** the measuring device comprises that
- each feeding chute (1;17) has a means for generating vibrations at controlled frequency (19;12),
- a first set of a first camera unit (7) and a first light source (8) arranged below the first feeding chute (1),
- a second set of a second camera unit (13) and a second light source (15) arranged below the second feeding chute, wherein
- both the first set of a first camera unit (7) and a first light source (8) and the second set of a second camera unit (13) and a second light source (15) is placed so that the particles (2;18) fall freely through the optical path between a camera unit (7;13) and a light source (8;15) of a respective set,
- the means for generating vibrations at controlled frequency (19;12) and the camera units (1;13) are connected to a computer unit (21),
- the computer unit (21) is adapted to
- receive the signals from the camera units (7;13) and analyze said signals in order to control the means for generating vibrations at controlled frequency (19;12), and
- adapted to analyse the densities of the particles on the respective feeding chute (1:17) and to analyse the size distribution of particles in a sample,
and
- the means for generating vibrations at controlled frequency (19;12) are adapted to control the vibration speed of each of the first (1) and the second feeding chutes (17) independently.

2. A measuring device according to any of claim 1, **characterized in that** the feeding chutes are formed with a closed end (4;10), an open end (5;16) and sides.

3. A measuring device according to any of the claims 1 or 2, **characterized in that** the feeding chutes (1;17) slope from a closed end to an open end, which sloping is downward, horizontal or upward.

4. A measuring device according to any of the preceding claims 1, 2 or 3, **characterized in that** one or both of the first feeding chute (1) and the second feeding chute (17) has a concave, a convex or a flat bottom.

5. A measuring device according to any of the preceding claims 1, 2 or 3, **characterized in that** the first feeding chute (1) has a different shape than the second feeding chute (17).

6. A measuring device according to any of the preceding claims 1 - 5, **characterized in that** the camera of the camera unit is a color camera.

7. A method of analyzing particles using the measuring device according to any of the preceding claims 1 - 6, wherein a sample of particles (2;18)) is transported in two consecutive feeding chutes (1;17) by means of means for generating vibrations at controlled frequency (19;12) in such a way that the particles (18) on the second feeding chute (17) are separated before they fall freely through the optical path after said second feeding chute (17), **characterized in that**
- the flow of particles (2) that fall out over an open edge (5) of the first feeding chute (1) is controlled by the signals from the first camera unit (7) under the first feeding chute (1), and
- a feedback of the signals from the second and subsequent camera unit (13) under the second feeding chute (17) is send to the computer unit (21) to control that any excessive particle density falling through the optical path at the open edge (16) of the second feeding chute (17) result in a reduction in the flow of particles (2) from the first feeding chute (1) as well as in a temporary reduction in the conveyance of particles (18) on the second feeding chute (17).

8. A method according to claim 7, **characterized in that** speed of the means for generating vibrations on the feeding chutes (19;12) are controlled continuously.

9. A method according to claims 7 or 8, **characterized in that** the speed of the means for generating vibrations (19;12) is set at full speed and controlled by time when the sample is terminated.

## Patentansprüche

1. Messvorrichtung für Analysen von Partikeln (2; 18; 23), die umfasst:
- eine erste Einfüllrutsche (1) und eine anschließende zweite Einfüllrutsche (17),
- wobei die erste Einfüllrutsche (1) und die anschließende zweite Einfüllrutsche (17) so angeordnet sind, dass die erste Einfüllrutsche (1) über der anschließenden zweiten Einfüllrutsche (17) angeordnet ist, so dass die Partikel (2) eines Partikelflusses, der von einem freien offenen Ende (5) der ersten Einfüllrutsche (1) fällt, so gesteuert werden, dass die Partikel (2) im freien Fall auf die anschließende zweite Einfüllrutsche (17) abgegeben werden,
- die Einfüllrate der Einfüllrutschen (1; 17) durch Signale von Kameraeinheiten (7; 13) gesteuert wird, wobei die Signale durch eine Computereinheit (21) analysiert werden, wobei die Partikel (18) auf der anschließenden zweiten Einfüllrutsche (17) getrennt werden, bevor sie über den Rand am offenen Ende (16) der anschließenden zweiten Einfüllrutsche (17) herausfallen,
**dadurch gekennzeichnet, dass** die Messvorrichtung umfasst, dass:
- jede Einfüllrutsche (1; 17) ein Mittel zum Generieren von Vibrationen mit einer kontrollierten Frequenz (19; 12) aufweist,
- ein erster Satz aus einer ersten Kameraeinheit (7) und einer ersten Lichtquelle (8) unter der ersten Einfüllrutsche (1) angeordnet ist,
- ein zweiter Satz aus einer zweiten Kameraeinheit (13) und einer zweiten Lichtquelle (15) unter der zweiten Einfüllrutsche angeordnet ist,
- sowohl der erste Satz aus einer ersten Kameraeinheit (7) und einer ersten Lichtquelle (8) als auch der zweite Satz aus einer zweiten Kameraeinheit (13) und einer zweiten Lichtquelle (15) so angeordnet sind, dass die Partikel (2; 18) frei durch den optischen Pfad zwischen einer Kameraeinheit (7; 13) und einer Lichtquelle (8; 15) eines jeweiligen Satzes fallen,
- das Mittel zum Generieren von Vibrationen mit kontrollierter Frequenz (19; 12) und die Kameraeinheiten (1; 13) mit einer Computereinheit (21) verbunden sind,
- die Computereinheit (21) dafür ausgelegt ist:
- die Signale von den Kameraeinheiten (7; 13) zu empfangen und diese Signale zu analysieren, um das Mittel zum Generieren von Vibrationen mit kontrollierter Frequenz (19; 12) zu steuern, und
- die Dichten der Partikel auf der jeweiligen Einfüllrutsche (1:17) zu analysieren und die Größenverteilung der Partikel in einer Probe zu analysieren,
und
- das Mittel zum Generieren von Vibrationen mit kontrollierter Frequenz (19; 12) dafür ausgelegt ist, die Vibrationsgeschwindigkeit jeder der ersten (1) und der zweiten Einfüllrutsche (17) unabhängig steuern.

2. Messvorrichtung nach einem der Ansprüche 1, **dadurch gekennzeichnet, dass** die Einfüllrutschen mit einem geschlossenen Ende (4; 10), einem offenen Ende (5; 16) und Seiten ausgebildet sind.

3. Messvorrichtung nach einem der Ansprüche 1 oder 2, **dadurch gekennzeichnet, dass** die Einfüllrutschen (1; 17) von einem geschlossenen Ende zu einem offenen Ende hin geneigt sind, wobei die Neigung nach unten, horizontal oder oben weist.

4. Messvorrichtung nach einem der vorangehenden Ansprüche 1, 2 oder 3, **dadurch gekennzeichnet, dass** eine oder beide der ersten Einfüllrutsche (1) und der zweiten Einfüllrutsche (17) einen konkaven, einen konvexen oder einen flachen Boden haben.

5. Messvorrichtung nach einem der vorangehenden Ansprüche 1, 2 oder 3, **dadurch gekennzeichnet, dass** die erste Einfüllrutsche (1) eine andere Form aufweist als die zweite Einfüllrutsche (17) .

6. Messvorrichtung nach einem der vorangehenden Ansprüche 1-5, **dadurch gekennzeichnet, dass** die Kamera der Kameraeinheit eine Farbkamera ist.

7. Verfahren zum Analysieren von Partikeln unter Verwendung der Messvorrichtung nach einem der vorangehenden Ansprüche 1-6, wobei eine Probe von Partikeln (2; 18) in zwei aufeinanderfolgenden Einfüllrutschen (1; 17) mit Hilfe eines Mittels zum Generieren von Vibrationen mit kontrollierter Frequenz (19; 12) in einer solchen Weise transportiert wird, dass die Partikel (18) auf der zweiten Einfüllrutsche (17) getrennt werden, bevor sie frei durch den optischen Pfad nach der zweiten Einfüllrutsche (17) fallen, **dadurch gekennzeichnet, dass**
- der Fluss von Partikeln (2), die über einen offenen Rand (5) der ersten Einfüllrutsche (1) herausfallen, durch die Signale von der ersten Kameraeinheit (7) unter der ersten Einfüllrutsche (1) gesteuert wird, und
- eine Rückmeldung der Signale von der zweiten und anschließenden Kameraeinheit (13) unter der zweiten Einfüllrutsche (17) an die Computereinheit (21) gesendet wird, um zu veranlassen, dass eine übermäßig hohe Partikeldichte, die durch den optischen Pfad an dem offenen Rand (16) der zweiten Einfüllrutsche (17) fällt, zu einer Verringerung des Flusses von Partikeln (2) von der ersten Einfüllrutsche (1) sowie zu einer vorübergehenden Verringerung des Transports von Partikeln (18) auf der zweiten Einfüllrutsche (17) führt.

8. Verfahren nach Anspruch 7, **dadurch gekennzeichnet, dass** die Geschwindigkeit des Mittels zum Generieren von Vibrationen auf den Einfüllrutschen (19; 12) kontinuierlich gesteuert wird.

9. Verfahren nach Anspruch 7 oder 8, **dadurch gekennzeichnet, dass** die Geschwindigkeit des Mittels zum Generieren von Vibrationen (19; 12) auf volle Geschwindigkeit eingestellt und anhand der Zeit gesteuert wird, wenn die Probe beendet wird.

## Revendications

1. Dispositif de mesure destiné à des analyses de particules (2 ; 18 ; 23) qui comprend :
- une première trémie d'alimentation (1) et une deuxième trémie d'alimentation (17) qui lui succède ;
- la première trémie d'alimentation (1) et la deuxième trémie d'alimentation (17) qui lui succède sont disposées d'une manière telle que la première trémie d'alimentation (1) est disposée au-dessus de la deuxième trémie d'alimentation (17) qui succède à la première, d'une manière telle que les particules (2) d'un flux de particules qui tombent à partir d'une extrémité ouverte libre (5) de la première trémie d'alimentation (1) sont soumises à un contrôle dans le but de distribuer lesdites particules (2) sous la forme d'une chute libre sur la deuxième trémie d'alimentation (17) qui succède à la première ;
- le débit d'alimentation des trémies d'alimentation (1 ; 17) est réglé par des signaux qui sont émis par des unités (7 ; 13) sous la forme de caméras, lesdits signaux étant analysés par une unité (21) sous la forme d'un ordinateur; dans lequel les particules (18), à la deuxième trémie d'alimentation (17) qui succède à la première, sont séparées avant de s'éloigner en tombant par-dessus le bord à l'extrémité ouverte (16) de la deuxième trémie d'alimentation (17) qui succède à la première ;
**caractérisé en ce que** le dispositif de mesure comprend :
- le fait que chaque trémie d'alimentation (1 ; 17) possède un moyen qui est destiné à générer des vibrations à une fréquence contrôlée (19 ; 12) ;
- un premier jeu constitué par une première unité (7) sous la forme d'une caméra et par une première source de lumière (8) qui est disposé en dessous de la première trémie d'alimentation (1) ;
- un deuxième jeu constitué par une deuxième unité (13) sous la forme d'une caméra et par une deuxième source de lumière (15) qui est disposé en dessous de la deuxième trémie d'alimentation ; dans lequel
- à la fois le premier jeu constitué par une première unité (7) sous la forme d'une caméra et par une première source de lumière (8) et le deuxième jeu constitué par une deuxième unité (13) sous la forme d'une caméra et par une deuxième source de lumière (15) sont placés d'une manière telle que les particules (2 ; 18) tombent librement en empruntant le chemin optique qui s'étend entre une unité (7 ; 13) sous la forme d'une caméra et une source de lumière (8 ; 15) d'un jeu respectif ;
- les moyens qui sont destinés à générer des vibrations à une fréquence contrôlée (19 ; 12) et les unités (1 ; 13) sous la forme de caméras sont raccordés à une unité (21) sous la forme d'un ordinateur ;
- l'unité (21) sous la forme d'un ordinateur est conçue pour :
- recevoir les signaux qui sont émis par les unités (7 ; 13) sous la forme de caméras et pour analyser lesdits signaux dans le but de commander les moyens qui sont destinés à générer des vibrations à une fréquence contrôlée (19 12) ; et
- est conçue pour analyser les masses volumiques des particules sur la trémie d'alimentation respective (1 ; 17) et pour analyser la granulométrie des particules dans un échantillon ;
et
- les moyens qui sont destinés à générer des vibrations à une fréquence contrôlée (19 ; 12) sont conçus pour régler la vitesse de vibration de chaque trémie choisie parmi la première trémie d'alimentation (1) et la deuxième trémie d'alimentation (17), d'une manière indépendante.

2. Dispositif de mesure selon la revendication 1, **caractérisé en ce que** les trémies d'alimentation sont réalisées avec une extrémité fermée (4 ; 10), une extrémité ouverte (5 ; 16) et des côtés.

3. Dispositif de mesure selon l'une quelconque des revendications 1 ou 2, **caractérisé en ce que** les trémies d'alimentation (1 ; 17) présentent une inclinaison depuis une extrémité fermée jusqu'à une extrémité ouverte, ladite inclinaison étant orientée vers le bas, disposée à l'horizontale ou orientée vers le haut.

4. Dispositif de mesure selon l'une quelconque des revendications 1, 2 ou 3, **caractérisé en ce qu'**une trémie choisie parmi la première trémie d'alimentation (1) et la deuxième trémie d'alimentation (17) ou les deux trémies en question possède(nt) une base de forme concave, une base de forme convexe ou une base de forme plate.

5. Dispositif de mesure selon l'une quelconque des revendications 1, 2 ou 3, **caractérisé en ce que** la première trémie d'alimentation (1) possède une configuration différente de celle de la deuxième trémie d'alimentation (17).

6. Dispositif de mesure selon l'une quelconque des revendications précédentes 1 à 5, **caractérisé en ce que** la caméra de l'unité sous la forme d'une caméra représente une caméra en couleurs.

7. Procédé d'analyse de particules dans lequel on utilise le dispositif de mesure selon l'une quelconque des revendications 1 à 6, dans lequel un échantillon de particules (2 ; 18) est transporté dans deux trémies d'alimentation successives (1 ; 17) grâce à l'utilisation de moyens qui sont destinés à générer des vibrations à une fréquence contrôlée (19; 12) d'une manière telle que les particules (18) sur la deuxième chute d'alimentation (17) sont séparées avant de tomber librement en empruntant le chemin optique qui fait suite à ladite deuxième trémie d'alimentation (17), **caractérisé en ce que** :
- le flux de particules (2) qui s'éloignent en tombant par-dessus un bord ouvert (5) de la première trémie d'alimentation (1) est contrôlé par les signaux qui sont émis par la première unité (7) sous la forme d'une caméra, en dessous de la première trémie d'alimentation (1) ; et
- une rétroaction des signaux qui sont émis par la deuxième unité (13) sous la forme d'une caméra qui fait suite à la première, située en dessous de la deuxième trémie d'alimentation (17) est envoyé à l'unité (21) sous la forme d'un ordinateur afin de procéder à un réglage tel qu'une quelconque masse volumique des particules en excès qui tombent en empruntant le chemin optique au bord ouvert (16) de la deuxième trémie d'alimentation (17) donne lieu à une réduction du flux de particules (2) à partir de la première trémie d'alimentation (1) ainsi qu'à une réduction temporaire du transport des particules (18) sur la deuxième trémie d'alimentation (17).

8. Procédé selon la revendication 7, **caractérisé en ce que** la vitesse des moyens qui sont destinés à générer des vibrations au niveau des trémies d'alimentation (19 ; 12) est réglée d'une manière continue.

9. Procédé selon la revendication 7 ou 8, **caractérisé en ce que** la vitesse des moyens qui sont destinés à générer des vibrations au niveau des trémies d'alimentation (19; 12) est réglée à une pleine vitesse et est réglée en prenant en compte le délai qui correspond à la fin de l'analyse de l'échantillon.
